Europäisches Patentamt

European Patent Office

Office européen des brevets

(19)

(11) Veröffentlichungsnummer: **0 063 536**
**B1**

(12) **EUROPÄISCHE PATENTSCHRIFT**

(45) Veröffentlichungstag der Patentschrift:
03.10.84

(51) Int. Cl.³: **H 01 B 17/58**

(21) Anmeldenummer: **82730041.9**

(22) Anmeldetag: **23.03.82**

(54) **Elektrische Leitung mit Knickschutztülle.**

(30) Priorität: **06.04.81 DE 3114419**

(43) Veröffentlichungstag der Anmeldung:
**27.10.82 Patentblatt 82/43**

(45) Bekanntmachung des Hinweises auf die Patenterteilung:
**03.10.84 Patentblatt 84/40**

(84) Benannte Vertragsstaaten:
**AT CH DE FR GB IT LI NL SE**

(56) Entgegenhaltungen:
**FR - A - 2 397 084**
**US - A - 2 115 495**
**US - A - 2 727 088**
**US - A - 3 243 835**

(73) Patentinhaber: **Siemens Aktiengesellschaft, Berlin und München Wittelsbacherplatz 2, D-8000 München 2 (DE)**

(72) Erfinder: **Schräpler, Herbert, Dipl.-Ing., Feldstrasse 8, D-8631 Ahorn (DE)**

ACTORUM AG

## Beschreibung

Die Erfindung befasst sich mit der konstruktiven Ausgestaltung einer Knickschutztülle, die am Ende einer in ein ortsveränderliches elektrisches Gerät einzuführenden flexiblen elektrischen Leitung angeordnet ist.

Mit Rücksicht auf häufige Biegebeanspruchungen, denen flexible elektrische Leitungen an der Stelle der Einführung in ein ortsveränderliches Gerät ausgesetzt sind, werden die Leitungen an dieser Stelle mit einer im Gerät verankerten Knickschutztülle versehen.

Eine bekannte Knickschutztülle besteht aus plastischem oder elastomerem Material und ist fest mit der Leitung verbunden. Um diese Knickschutztülle auch an Geräten montieren zu können, bei denen an der Anschlussstelle im Gehäuse keine Trennebene sondern nur ein rundum von der Gehäusewandung umgebenes Loch vorliegt, ist die Knickschutztülle mit einer umlaufenden Aussparung versehen, in der ein elastisch federnder Ring aus mechanisch festem Isoliermaterial angebracht ist; dieser Ring weist eine umlaufende, der Aufnahme der Wandung des Gehäuses dienende Ausnehmung auf (DE-A Nr. 2922655). Diese zweiteilige Ausgestaltung der Knickschutztülle bedingt einen entsprechenden Fertigungs- und Montageaufwand.

Zur Fixierung der zweiadrigen Anschlussleitung eines Radios in der Gehäusedurchführung ist es bekannt, auf die Anschlussleitung einen runden Gummikörper aufzuspritzen, der doppelkegelig ausgebildet ist, in der Mitte eine Ringnut aufweist, deren Breite und Tiefe an die ensprechende Öffnung in der Gehäusewand angepasst ist, und dessen einer Kegelstumpf mit axial verlaufenden Schlitzen versehen ist. Diese Schlitze sollen beim Einstecken des Gummikörpers in die Öffnung der Gehäusewand eine elastische Durchmesserreduzierung ermöglichen (US-A Nr. 2115495).

Ausgehend von einer flexiblen elektrischen Leitung mit den Merkmalen des Oberbegriffes des Anspruches 1 liegt der Erfindung die Aufgabe zugrunde, die Verankerung der Knickschutztülle in der Gehäusewand durch eine Vergrösserung der radialen elastischen Verformbarkeit zu verbessern.

Zur Lösung dieser Aufgabe ist gemäss der Erfindung vorgesehen, dass das auf der einen Seite der umfänglichen Nut liegende, in das Gehäuse des Gerätes einzuschiebende Ende der Knickschutztülle jungpilzförmig mit einem kuppenartigen Hut und mit einem Stiel ausgebildet ist und dass sich der kuppenartige Hut über am Umfang gleichmässig verteilte Stege auf dem Stiel abstützt.

Durch diese Ausgestaltung der Knickschutztülle ist eine grössere radiale Elastizität des vorderen Endes der Knickschutztülle gegeben, so dass beim Einschieben der mit der Knickschutztülle versehenen elektrischen Leitung in die Bohrung einer Gehäusewand die an die Bohrung angrenzenden Bereiche der Gehäusewand tiefer und damit sicherer in die Nut der Knickschutztülle einrasten können.

In Weiterbildung der Erfindung kann die radiale Elastizität des einen Endes der Knickschutztülle dadurch verbessert werden, dass der kuppenartige Hut mit parallel zur Achse der Knickschutztülle verlaufenden Schlitzen versehen ist.

Hinsichtlich der Funktion des Knickschutzes empfiehlt sich im übrigen eine solche Ausgestaltung der Knickschutztülle, bei der das rückwärtige Ende der Knickschutztülle ähnlich einer auslaufenden e-Funktion verjüngt ist. Dabei kann es von Vorteil sein, dass der unmittelbar an die ringförmige Nut angrenzende Bereich dieses Endes der Knickschutztülle zunächst zylindrisch ausgebildet ist, um eine Abstützung der Knickschutztülle in diesem Bereich in einer entsprechenden Ausnehmung der Gehäusewand sicherzustellen.

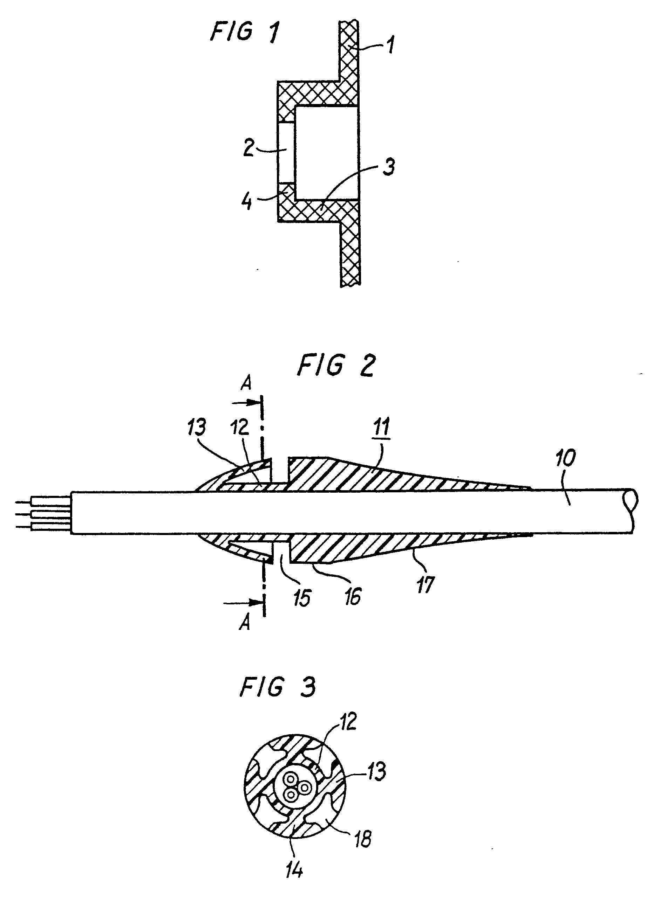

Ein Ausführungsbeispiel einer mit der neuen Knickschutztülle versehenen mehradrigen elektrischen Leitung einschliesslich der entsprechenden Einführung in das Gehäuse eines elektrischen Gerätes ist in den Fig. 1 bis 3 dargestellt.

Fig. 1 zeigt im Ausschnitt die Wand 1 des Gehäuses eines elektrischen Gerätes, in der eine Bohrung 2 zur Einführung einer elektrischen Leitung sowie einer entsprechenden Knickschutztülle vorgesehen ist. Die Bohrung 2 befindet sich dabei in einer zylindrischen Einführung der Gehäusewand, die in den Kragen 4 übergeht.

Gemäss Fig. 2 ist die mehradrige elektrische Leitung 10 mit der Knickschutztülle 11 versehen, die beispielsweise getrennt hergestellt und anschliessend auf die Leitung aufgeschoben und mit dieser stoffschlüssig (beispielsweise durch Verkleben) verbunden ist oder die auf die elektrische Leitung aufgespritzt und dabei stoffschlüssig mit dem Mantel der Leitung verbunden ist. Die Knickschutztülle ist, insgesamt gesehen, torpedoartig ausgebildet und am vorderen Ende jungpilzförmig gestaltet. Dabei wird der hohle Stiel 12 von der Leitung 10 durchsetzt, während an diesen Stiel der kuppenartige Hut 13 anschliesst. Dieser endet an der Nut 15, die auf der anderen Seite von dem zylindrischen Stück 16 der Knickschutztülle begrenzt ist. Hieran schliesst sich das rückwärtige Ende der Knickschutztülle an, das im Bereich 17 ähnlich oder nach Art einer auslaufenden e-Funktion verjüngt ist.

Fig. 3 zeigt einen Schnitt der Knickschutztülle längs der Schnittlinie A-A. Diese Schnittdarstellung gibt zu erkennen, dass der kuppenartige Hut mit in parallel zur Achse der Knickschutztülle verlaufenden Schlitzen 18 versehen ist und dass sich die einzelnen Bereiche des Hutes über Stege 14 auf dem Stiel 12 abstützen.

## Patentansprüche

1. Flexible elektrische Leitung (10), die zur Einführung in ein ortsveränderliches Gerät (1) (Haushaltsgerät, Bohr- und Schneidwerkzeug) an einem Ende mit einer fest aufsitzenden, gleichzeitig als Zugabfangung dienenden Knickschutztülle (11) aus plastischem oder elastomerem Material versehen ist und bei der diese Knickschutztülle mittels einer umfänglichen Ausnehmung (15) in einer Bohrung (2) einer Gehäusewand (1) des Gerätes verankerbar ist, wobei die Ausnehmung aus einer Nut (15) besteht, deren Breite der Dicke der Gehäusewand (1) entspricht, und wobei der Durchmesser der Knickschutztülle (11) beiderseits der Nut grösser ist als der Durchmesser der Bohrung (2) in der Gehäusewand (1), dadurch gekennzeichnet, dass das auf der einen seite der umfänglichen Nut (15) liegenden, in das Gehäuse des Gerätes einzuschiebende Ende der Knickschutztülle jungpilzförmig mit einem kuppenartigen Hut (13) und mit einem Stiel (12) ausgebildet ist und dass sich der kuppenartige Hut (13) über am Umfang gleichmässig verteilte Stege (14) auf dem Stiel (12) abstützt.

2. Elektrische Leitung mit Knickschutztülle nach Anspruch 1, dadurch gekennzeichnet, dass der kuppenartige Hut (13) mit parallel zur Achse der Knickschutztülle verlaufenden Schlitzen (18) versehen ist.

## Claims

1. A flexible electric lead (10) which, for insertion into a mobile apparatus (1) (household appliance, boring and cutting tool), is provided at one end with a securely mounted anti-kink sleeve (11), which simultaneously serves as a pull interceptor and is made of a plastic or elastomeric material, and wherein said anti-kink sleeve can be anchored in a bore (2) of a housing wall (1) of the apparatus by means of a peripheral recess (15), the recess consisting of a groove (15), the width of which corresponds to the thickness of the housing wall (1), and the diameter of the anti-kink sleeve (11) being greater than the diameter of the bore (2) in the housing wall (1) on both sides of the groove, characterised in that the end of the anti-kink sleeve which is arranged on the one side of the peripheral groove (15) and which is to be inserted into the housing of the apparatus is shaped like a young mushroom with a dome-like cap (13) and a stem (12), and that the dome-like cap (13) is supported on the stem (12) by means of bridges (14) which are evenly distributed around the periphery.

2. An electric lead with an anti-kink sleeve as claimed in Claim 1, characterised in that the dome-like cap (13) is provided with slots (18) which extend parallel to the axis of the anti-kink sleeve.

## Revendications

1. Conducteur électrique flexible (10) qui est, pour son introduction dans un appareil déplaçable (1) (appareil ménager outil à percer et à découper), pourvu à son extrémité d'un manchon anticoude (11) en un matériau plastique ou élastomère, monté fermement sur cette extrémité et servant en même temps à absorber les efforts de traction, et dans lequel ce manchon anticoude est susceptible d'être ancré à l'aide d'un creux périphérique (15) dans un perçage (2) d'une paroi de l'appareil, ledit creux étant constitué par une gorge (15) dont la largeur correspond à l'épaisseur de la paroi (1) du carter, alors que le diamètre du manchon anticoude (11) est, de part et d'autre de la gorge, supérieur au diamètre du perçage (2) ménagé dans la paroi (1) du carter, caractérisé par le fait que l'extrémité du manchon anticoude, qui est située sur un côté de la gorge périphérique (15) et qui est à engager dans le carter de l'appareil, est réalisée en forme de champignon aminci ayant un chapeau en forme de calotte (13) et un pied (12), et que le chapeau (13) en forme de calotte prend appui sur la tige (12) par l'intermédiaire d'entretoises (14) réparties uniformément sur la périphérie.

2. Conducteur électrique flexible à manchon anticoude selon la revendication 1, caractérisé par le fait que le chapeau (13) en forme de calotte est pourvu de fentes (18) s'étendant parallèlement à l'axe du manchon anticoude.

0 063 536

FIG 1

FIG 2

FIG 3